# EUROPEAN PATENT SPECIFICATION

(11) **EP 2 114 081 B1**
(45) Date of publication and mention of the grant of the patent: **03.10.2018**
(21) Application number: 09158912.7
(22) Date of filing: 28.04.2009
(51) Int. Cl.: H04Q 9/00, F28F 25/00, F28F 27/00

(54) **A TELEMONITORING CONTROL UNIT, IN PARTICULAR FOR COOLING TOWERS, AND A METHOD FOR POWER SUPPLY OF SAID CONTROL UNIT**
FERNÜBERWACHUNGSSTEUEREINHEIT, INSBESONDERE FÜR KÜHLTÜRME UND VERFAHREN FÜR DIE STROMVERSORGUNG DER STEUEREINHEIT
TÉLÉSURVEILLANCE D'UNITÉ DE COMMANDE, EN PARTICULIER POUR REFROIDIR DES TOURS, ET PROCÉDÉ D'ALIMENTATION DE CETTE UNITÉ DE COMMANDE

(30) Priority: 29.04.2008 IT MI20080789
(43) Date of publication of application: 04.11.2009
(73) Proprietor: Spig S.P.A., 28041 Arona (IT)
(72) Inventor: Mosiewicz, Jerzy, 20121 Milano (IT); Toffanin, Andrea, 28062 Cameri (IT)
(74) Representative: Torti, Carlo Maria Emilio

(56) References cited:
- WO-A1-2004/040389
- WO-A1-2007/085850
- CN-A- 101 173 965
- US-A1- 2002 145 538

## Description

### Field of the invention

The present invention relates to a telemonitoring control unit, in particular for cooling towers, and to a method for power supply of said control unit.

### State of the art

Monitoring control units are widely used for measuring and recording environmental parameters of interest. They are normally installed in large urban centres for evaluating the presence and percentage of fine dust in the environment and the composition of the atmosphere.

In the industrial environment and in particular in cooling towers or air coolers the task of monitoring the mechanical conditions of said installations and certain characteristic parameters thereof that are symptomatic of the thermodynamic cycle in progress proves particularly burdensome.

For the above purpose, battery-supplied instruments are used by skilled operators, and the data are stored therein so as to be developed subsequently.

Another problem is the possible presence of Legionella, which, as is known, is a bacterium that finds its normal habitat in particularly humid environments, such as cooling towers, and constitutes a health risk for the staff employed on account of the fact that inhalation of said bacterium may lead to death.

A further far from insignificant problem is linked to the fact that, in the majority of pre-existing power stations, power-supply lines are not available in the vicinity of the towers. This means that, even though the aim is to provide common telemonitoring control units, it would not be possible to supply them unless an appropriate and costly electric power-supply system were provided.

In particular, there exist cases in which the control units and the corresponding power-supply system must be able to withstand particularly aggressive external agents; in other cases they must themselves be able to guarantee that no harm will be incurred by the external environment, for example, in localities that present a major risk of explosion, such as oil refineries. In such environments, there exist in fact, at a European level and harmonized in Italy, specific and burdensome technical directives, the ones best known being the ATEX directives.

Notwithstanding the fact that the problem is widespread, on account of the complexity thereof, so far no telemonitoring systems are known for power stations, cooling towers, and oil refineries.

Document WO 2004/040 389 A1 relates to a monitoring system for monitoring environments such as cooling towers, which may be powered by solar power.

### Summary of the invention

The purpose of the present invention is to provide a telemonitoring control unit, in particular for cooling towers, that is suitable for being installed in environments in which aggressive agents are present and/or which present hazards, minimizing the works of installation and human intervention.

The purpose of the present invention is consequently to achieve the purposes discussed above by providing a telemonitoring control unit, as specified in Claim 1.

In particular, said control unit solves the problem of the critical aspects presented by its use in places where there is a major risk of explosion given that it is absolutely autonomous both from the standpoint of the power supply and from the standpoint of communications, with a limitation of the number of conductors that connect said control unit to the sensor system.

Another aspect of the present invention is to provide a method for power supply of said control unit for telemonitoring cooling towers or air coolers.

According to another aspect of the invention, said device is particularly appropriate for application to cooling towers or air coolers and in an industrial environment in general, by providing a modular structure to which it is possible to connect, as the case requires, cards for interface to specific sensors according to the environmental parameters and chemical and bacteriological agents that are to be monitored.

The dependent claims describe preferred embodiments of the invention and form an integral part of the description.

### Brief description of the figures

Further characteristics and advantages of the invention will emerge more clearly from the detailed description of a preferred, albeit non-exclusive, embodiment of a telemonitoring control unit, illustrated by way of non-limiting example with the aid of the annexed plates of drawings, wherein:
Figure 1 illustrates a telemonitoring control unit complete with sensors, such as a thermometer and an accelerometer and an external or internal transmission antenna;
Figure 2 shows a functional diagram of said telemonitoring control unit;
Figure 3 shows a control unit with the photovoltaic generator external thereto.

### Detailed description of a preferred embodiment of the invention

A telemonitoring control unit in accordance with the present invention comprises:
- a container 1 from which a lateral surface portion has been removed;
- a glazed surface 2.1, which replaces said lateral surface portion and is designed to guarantee sealing of said container 1;
- a photovoltaic generator 2, internal to said container 1, set underneath and facing said glazed surface 2.1;
- a battery accumulator 22 connected to said generator 2;
- at least one cable gland 3 on a side surface of said container 1, so as to enable passage of at least one electric-power cable 4, ensuring sealing of the container;
- at least one sensor 5 connected to said electric-power cable 4 outside the container;
- wireless-communication means 60;
- interface means 51 for adaptation of the signal coming from said sensor 5; and
- means for control and management 70 of at least one interface card 51 and of at least said wireless-communication means 60.

It is preferable for said container to be of the type that meets the requirements of the ATEX directive.

A control unit of the above sort is autonomous from the standpoint of the system since it is able to generate autonomously, by means of said photovoltaic generator, the electric power that is necessary for its operation and since the transmission of the data recorded is obtained by means of wireless technology, for example, GSM or GPRS or UMTS, or else W-LAN, or else by satellite transmission.

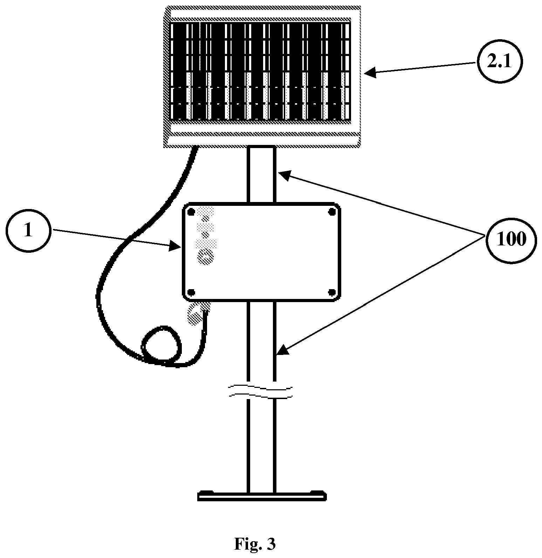

Another preferred embodiment (see Figure 3) envisages that the photovoltaic generator is external. In particular, the generator and the control unit can be carried by a support 100, designed to support both of them. Said support can comprise adjustment means, not shown, designed to enable convenient orientation of the generator in the direction of the Sun.

In another preferred embodiment, said wireless-communication means 60 comprise short-range communication means, e.g., ones using Bluetooth or W-LAN (WiFi) technology, and long-range communication means, such as, for example, GSM or GPRS or UMTS, W-LAN, or else satellite transmission.

In this way, in the case where any number of control units of the above sort are used, these are designed to communicate with one another so that just one of them may be responsible for gathering the data recorded thereby and by the other control units and for remote transmission of said data through said long-range communication means.

In another preferred embodiment, instead of being provided with a photovoltaic generator or in addition to being provided therewith, said control unit comprises a wind-powered electric-power generator. In particular, in monitoring cooling towers or air coolers, where the condition of a major risk of explosion does not arise, it becomes possible to exploit a wind-powered generator that is designed to draw energy from the outflow of air from the tower or air cooler itself.

It is clear that, in the absence of a photovoltaic generator, it is of no importance that the lateral surface portion of the container is removed and is replaced with a glazed surface.

Said container, thus sealed and provided with cable glands, is sealed in regard to the external environment so as to prevent any possible propagation of flame into the external atmosphere, but also so as to protect the internal circuitry from any possible aggression by external agents.

Said power-supply means 2 envisage as further solution a system for limiting overcurrents so as to limit the development of heat in the case of any malfunctioning of the internal circuitry.

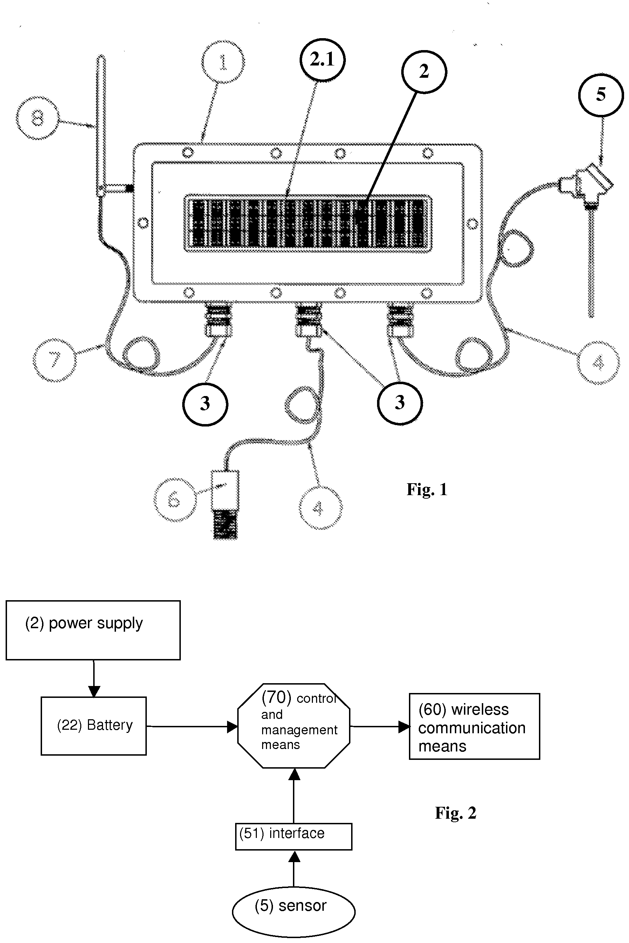

In the preferred embodiment illustrated in Figure 1, the telemonitoring control unit has three cable glands 3, connected to which, by means of as many electric-power cables, are a temperature sensor 5, in compliance with the ATEX directive, an accelerometer 6, and an antenna 8 for said wireless-communication means 60. In another preferred embodiment, said antenna 8 is located inside the container 1. The main sensors (but these are not the only ones) that can be connected to said control unit are, in addition to temperature and vibration sensors: humidity sensors; liquid-level sensors; and angular-velocity sensors. In particular, the vibration and angular-velocity sensors are particularly useful for detection of mechanical faults, for example, when any failure of bearings in rotating systems is about to occur, or else for detection of excessive slipping of induced pulleys in the cooling systems.

From what has been set forth above it is clear that a method for power supply of telemonitoring control units for cooling towers comprises: a step in which a wind-powered electric-power generator is provided, oriented in the direction of outflow of the fluids leaving a cooling tower; and a subsequent step, in which the energy produced by the generator is exploited for supplying a telemonitoring control unit.

The advantages of the present invention emerge clearly.

In the first place, use of telemonitoring control units becomes possible in particularly aggressive environments without the need of providing a purposely devised power supply system. In addition, in the case of cooling towers, the continuous outflow of air from the towers is exploited for supplying a wind-powered generator.

The remotely retrieved data can advantageously be used for carrying out accurate statistical analyses, this constituting an aspect that has so far been impossible. Said analyses enable not only detection of anomalous situations but also forecasting and prediction of their occurrence.

The particular modes of implementation described herein in no way limit the contents of the present application, which covers all the variants of the invention defined in the annexed claims.

## Claims

1. A telemonitoring control unit for cooling towers comprising:
- a container (1);
- autonomous power-supply means (2);
- a battery accumulator (22) connected to said autonomous power-supply means (2);
- at least one cable gland (3) on a side surface of said container (1) so as to enable passage of at least one electric-power cable (4), ensuring sealing of the container;
- at least one sensor (5) connected to said electric-power cable (4) outside the container;
- wireless-communication means (60);
- interface means (51) for adaptation of the signal coming from said sensor (5); and
- means (70) for control and management of at least one interface card (51) and at least said wireless-communication means (60); **characterised in that**:
- the data detected by said sensors are being processed and transferred by means of said wireless-communication means;
- a lateral surface portion is removed from said container (1) and is replaced by a glazed surface (2.1), which replaces said lateral surface portion and is designed to guarantee sealing of said container (1); and
- said autonomous power-supply means (2) is based upon photovoltaic technology (2), is internal to said container (1) and is set underneath said glazed surface (2.1) facing it.

2. The control unit according to Claim 1, wherein said autonomous power-supply means (2) comprises a wind-powered generator, designed to operate with a flow rate of fluid coming out of a cooling tower or air cooler.

3. The control unit according to Claim 1, wherein said autonomous power-supply means (2) comprises also a photovoltaic generator external to the control unit.

4. The control unit according to Claim 1, wherein said wireless-communication means is based on GSM and/or GPRS and/or UMTS and/or W-LAN and/or satellite technology.

5. The control unit according to Claim 1, wherein said autonomous power-supply means (2) comprises means for limiting overcurrents.

6. The control unit according to Claim 1, further comprising an internal or external antenna (8), designed to improve wireless communication.

7. The control unit according to Claim 1, wherein said at least one sensor (5) is a temperature sensor and/or a humidity sensor and/or a liquid-level sensor, and/or an accelerometer (6) designed to detect mechanical vibrations, and/or an angular-velocity sensor designed to detect a slipping of induced pulleys.

8. The control unit according to Claim 1 or Claim 3, further comprising a support (100), designed to support said control unit and possibly the photovoltaic generator.

## Patentansprüche

1. Fernüberwachungssteuerungseinheit für Kühltürme, umfassend:
- einen Behälter (1);
- ein Mittel (2) zur autonomen Stromversorgung;
- einen Batterieakkumulator (22), der mit dem Mittel (2) zur autonomen Stromversorgung verbunden ist;
- mindestens eine Kabelverschraubung (3) an einer Seitenoberfläche des Behälters (1), um ein Durchführen von mindestens einem elektrischen Stromkabel (4) zu ermöglichen, die ein Abdichten des Behälters sicherstellt;
- mindestens einen Sensor (5), der außerhalb des Behälters mit dem elektrischen Stromkabel (4) verbunden ist;
- ein Drahtloskommunikationsmittel (60);
- ein Schnittstellenmittel (51) zur Anpassung des Signals, das von dem Sensor (5) stammt; und
- ein Mittel (70) zum Steuern und Verwalten mindestens einer Schnittstellenkarte (51) und mindestens des Drahtloskommunikationsmittels (60); **dadurch gekennzeichnet, dass**:
- die Daten, die von den Sensoren detektiert werden, verarbeitet werden und mit Hilfe des Drahtloskommunikationsmittels übertragen werden;
- ein Teil einer seitlichen Oberfläche von dem Behälter (1) entfernt ist und durch eine verglaste Oberfläche (2.1) ersetzt ist, welche den Teil der seitlichen Oberfläche ersetzt und konstruiert ist, um ein Abdichten des Behälters (1) zu garantieren; und
- das Mittel (2) zur autonomen Stromversorgung auf Photovoltaiktechnologie (2) beruht, sich innerhalb des Behälters (1) befindet und unter der verglasten Oberfläche (2.1) dieser zugewandt platziert ist.

2. Steuerungseinheit nach Anspruch 1, wobei das Mittel (2) zur autonomen Stromversorgung einen windbetriebenen Generator umfasst, der konstruiert ist, um mit einer Strömungsrate eines Fluids zu arbeiten, das aus einem Kühlturm oder einem Luftkühler stammt.

3. Steuerungseinheit nach Anspruch 1, wobei das Mittel (2) zur autonomen Stromversorgung auch einen Photovoltaikgenerator außerhalb der Steuerungseinheit umfasst.

4. Steuerungseinheit nach Anspruch 1, wobei das Drahtloskommunikationsmittel auf GSM und/oder GPRS und/oder UMTS und/oder W-LAN und/oder Satellitentechnologie beruht.

5. Steuerungseinheit nach Anspruch 1, wobei das Mittel (2) zur autonomen Stromversorgung ein Mittel zum Begrenzen von Überströmen umfasst.

6. Steuerungseinheit nach Anspruch 1, die ferner eine interne oder eine externe Antenne (8) umfasst, die zum Verbessern von Drahtloskommunikation konstruiert ist.

7. Steuerungseinheit nach Anspruch 1, wobei der mindestens eine Sensor (5) ein Temperatursensor und/oder ein Feuchtigkeitssensor und/oder ein Flüssigkeitspegelsensor und/oder ein Beschleunigungsmesser (6), der zum Detektieren mechanischer Vibrationen konstruiert ist, und/oder ein Winkelgeschwindigkeitssensor ist, der zum Detektieren eines Schlupfs von angeregten Riemenscheiben konstruiert ist.

8. Steuerungseinheit nach Anspruch 1 oder Anspruch 3, die ferner eine Stütze (100) umfasst, die konstruiert ist, um die Steuerungseinheit und möglicherweise den Photovoltaikgenerator abzustützen.

## Revendications

1. Unité de commande de télésurveillance pour tours de refroidissement comprenant :
- un conteneur (1) ;
- des moyens d'alimentation électrique autonomes (2) ;
- un accumulateur de batterie (22) connecté auxdits moyens d'alimentation électrique autonomes (2) ;
- au moins un presse-étoupe (3) sur une surface latérale dudit conteneur (1) de façon à permettre le passage d'au moins un câble d'alimentation électrique (4), en assurant l'étanchéité du conteneur ;
- au moins un capteur (5) connecté audit câble d'alimentation électrique (4) à l'extérieur du conteneur ;
- des moyens de communication sans fil (60) ;
- des moyens d'interface (51) pour l'adaptation du signal provenant dudit capteur (5) ; et
- des moyens (70) pour commander et gérer au moins une carte d'interface (51) et au moins lesdits moyens de communication sans fil (60) ;
**caractérisée en ce que** :
- les données détectées par lesdits capteurs sont traitées et transférées par l'intermédiaire desdits moyens de communication sans fil ;
- une partie de surface latérale est retirée dudit conteneur (1) et est remplacée par une surface vitrée (2.1), qui remplace ladite partie de surface latérale et est conçue pour garantir l'étanchéité dudit conteneur (1) ; et
- lesdits moyens d'alimentation électrique autonomes (2) sont basés sur la technologie photovoltaïque (2), sont internes audit conteneur (1) et sont établis en dessous de ladite surface vitrée (2.1) en lui faisant face.

2. Unité de commande selon la revendication 1, dans laquelle lesdits moyens d'alimentation électrique autonomes (2) comprennent un générateur à énergie éolienne, conçu pour fonctionner avec un débit de fluide sortant d'une tour de refroidissement ou d'un refroidisseur d'air.

3. Unité de commande selon la revendication 1, dans laquelle lesdits moyens d'alimentation électrique autonomes (2) comprennent également un générateur photovoltaïque externe à l'unité de commande.

4. Unité de commande selon la revendication 1, dans laquelle lesdits moyens de communication sans fil sont basés sur la technologie GSM et/ou GPRS et/ou UMTS et/ou W-LAN et/ou satellite.

5. Unité de commande selon la revendication 1, dans laquelle lesdits moyens d'alimentation électrique autonomes (2) comprennent des moyens pour limiter des surintensités.

6. Unité de commande selon la revendication 1, comprenant en outre une antenne interne ou externe (8), conçue pour améliorer la communication sans fil.

7. Unité de commande selon la revendication 1, dans laquelle ledit au moins un capteur (5) est un capteur de température et/ou un capteur d'humidité et/ou un capteur de niveau de liquide, et/ou un accéléromètre (6) conçu pour détecter des vibrations mécaniques, et/ou un capteur de vitesse angulaire conçu pour détecter un patinage de poulies induites.

8. Unité de commande selon la revendication 1 ou la revendication 3, comprenant en outre un support (100), conçu pour supporter ladite unité de commande et éventuellement le générateur photovoltaïque.
